# EUROPEAN PATENT SPECIFICATION

(11) **EP 1 550 119 B1**
(45) Date of publication and mention of the grant of the patent: **19.07.2006**
(21) Application number: 03798996.9
(22) Date of filing: 19.09.2003
(51) Int. Cl.: G11B 7/24

(54) **OPTICAL RECORD CARRIER FOR USE WITH UV RADIATION BEAM**
OPTISCHER AUFZEICHNUNGSTRÄGER GEEIGNET FÜR UV-BESTRAHLUNG
SUPPORT D'ENREGISTREMENT OPTIQUE DESTINE A ETRE UTILISE AVEC UN FAISCEAU DE RAYONNEMENT ULTRAVIOLET

(30) Priority: 02.10.2002 EP 02079091; 29.04.2003 EP 03101187
(43) Date of publication of application: 06.07.2005
(73) Proprietor: Koninklijke Philips Electronics N.V., 5621 BA Eindhoven (NL)
(72) Inventor: VAN SANTEN, Helmar, NL-5656 AA Eindhoven (NL); STAPERT, Hendrik, R., NL-5656 AA Eindhoven (NL); KLOOSTERBOER, Johan, G., NL-5656 AA Eindhoven (NL)
(74) Representative: Uittenbogaard, Frank
(86) International application number: PCT/IB2003/004090
(87) International publication number: WO 2004/032129

(56) References cited:
- WO-A-99/04911
- US-A- 4 315 269
- DATABASE WPI Section Ch, Week 199327 Derwent Publications Ltd., London, GB; Class G06, AN 1993-218804 XP002264475 & SU 1 746 186 A (UNIV KIEV SHEVCHENKO), 15 July 1992 (1992-07-15)

## Description

The present invention relates to an optical record carrier for recording and/or reading information using a radiation beam in the UV wavelength range, in particular having a wavelength in the range from 230 to 270 nm, comprising a substrate layer and an information stack comprising:
- an information layer comprising a material for forming marks and spaces representing an information by irradiation of the UV radiation beam,
- a cover layer on top of the side of the said record carrier facing the incident UV radiation beam.

Optical record carriers have seen an evolutionary increase in the data capacity by increasing the numerical aperture of the objective lens and a reduction of the radiation (e.g. laser) wavelength. The total data capacity was increased from 650 Mbyte (CD, NA=0.45, λ =780 nm) to 4.7 Gbyte (DVD, NA=0.65, λ=670 nm) to 25 Gbyte for the Blu-ray Disc (BD, NA=0.85, λ=405 nm,). The BD data density was derived from the DVD capacity by optical scaling. To achieve a further increase in data density one possibility is to further reduce the laser wavelength into the UV wavelength range. Suitable UV lasers will become available in the near future.

EP0731454 A1 discloses an optical recording method, optical recording apparatus and optical recording medium for use with a UV laser. A UV laser having a wavelength in the range from 190 to 370 nm and a lens having a numerical aperture of 0.4 or less shall be used to record identification information of the recording medium in a subsidiary information recording area outside the information recording area where audio, video or character data are recorded.

US-A-4 315 269 discloses an optical video disc having a thick protective overcoat layer made of cured silicone resin, which is intended to present deposition of dust on the surface of the disc.

It is an object of the present invention to provide an optical record carrier suitable for recording and/or reading information by use of a UV radiation beam.

This object is achieved according to the present invention by an optical record carrier according to the opening paragraph which is further characterized in that said cover layer is made of a cured resin composition being a silicon based reactive material. A UV radiation beam is to be understood to have a wavelength in the range 190 - 400 nm.

In the known optical record carriers such as CD, DVD and BD, the optical disk generally comprises an information stack sandwiched between a polycarbonate substrate layer and a plastic cover layer. The data is written and/or read―out through the transparent polycarbonate substrate layer or cover layer of the disc. However, at said UV wavelength, in particular in the range of 230 nm to 270 nm, the currently used materials for said substrate and cover layers are not transparent for the laser radiation. According to the present invention cover incidence is used for data recording and/or read-out, where the cover layer is made of materials transparent for incident UV radiation beam.

The resin composition according to the invention comprises 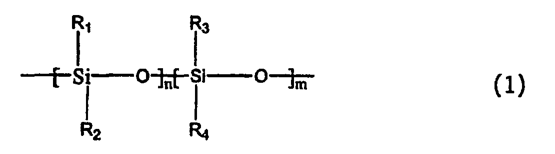 and 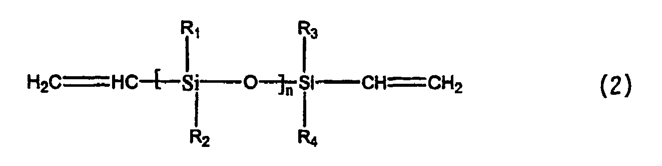 wherein R₁, R₂, R₃, R₄ = hydrogen, C₁-C₁₀-alkyl, vinyl, phenyl, hydroxide, amino, halogen atom and at least one of R₁, R₂, R₃ and R₄ is hydrogen.

In a preferred embodiment of the present invention the resin composition further comprises 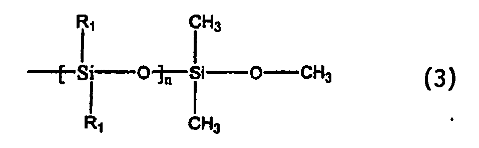 wherein R₁, R₂, R₃ and R₄ have the same meaning as already disclosed before.

In addition it is preferred that the resin composition further comprises 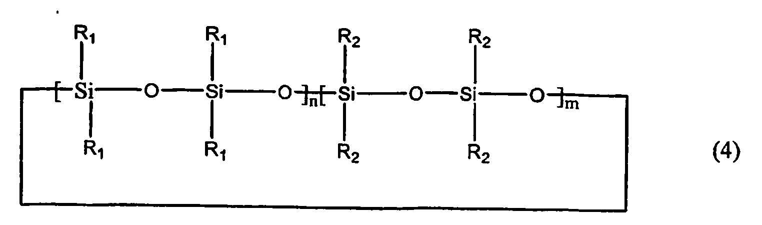 wherein R₁, R₂, R₃ and R₄ have the same meaning as already disclosed before.

It is to be noted that the resin composition also comprises a metal catalyst, e.g. a platinum based catalyst, in an amount of 5-10 ppm Pt.

It is preferred that component (1) is present in an amount of 40-70 wt.%, based on the total weight of the curable resin composition.

In addition, it is preferred that component (2) is present in an amount of 15-40 wt.%, based on the total weight of the curable resin composition.

Furthermore it is preferred that component (3) is present in an amount of 10-30 wt.%, based on the total weight of the curable resin composition.

It is preferred that component (4) is present in an amount of 1.0-5.0 wt.%, based on the total weight of the curable resin composition.

In a further embodiment the optical record carrier comprises at least one additional recording stack and at least one transparent spacer layer for separating the recording stacks from each other, said spacer layer (SP) being made of a resin composition as described above containing one or more of the components (1) - (4). Hence a spacer layer is achieved, which is substantially transparent to UV radiation.

In yet a further embodiment the optical record carrier further comprises at least one auxiliary layer comprising a material selected from the group of materials containing Al₂O₃, SiO₂, C, NaCl, ZrO, Si₃N₄, LiF, KCl, Al, Ag, Cu, Ag, Ir, Mo, Rh, Pt, Ni, Os, W. Such layer(s) may be required to improve the optical characteristics of the optical record carrier, e.g. optical reflection, optical contrast of written information. Furthermore these materials are suitable for use with UV radiation. The auxiliary layers may be, e.g., dielectric layers and/or metal layers. Most of the dielectric materials commonly used in current (DVD) and third generation (BD) phase-change optical record carriers absorb too much laser radiation at the UV recording wavelength in the range from 230 to 270nm. This has consequences for both the thermal and optical performance. For example, ZnS-SiO₂ - the material which is commonly used in optical recording stacks - has a rather high absorption coefficient in this wavelength range. In a conventional IPIM recording stack, where I denotes the dielectric layers made of ZnS-SiO₂, P the phase-change information layer and M the metal heat sink layer, the significant absorption in the two dielectric layers leads to a much broader temperature distribution than would be predicted on the bases of optical scaling conditions. Since a broader temperature distribution will lead to broader marks and further to cross-write phenomena, the achieved data capacity will be of the same magnitude as that of the third generation BD record carrier.

Other dielectric materials than ZnS-SiO₂ are preferably required for an optical record carrier which shall be used in combination with UV radiation. Possible materials are obtained by a survey including sputter deposition and optical analysis. It has thus been found that a material from the following group of materials can be advantageously used as dielectric layer in optical record carriers according to the present invention: Al₂O₃, SiO₂, C, NaCl, ZrO, Si₃N₄ LiF, KCl. The materials can be doped to further improve the optical, thermal, and mechanical properties. As a suitable phase-change recording material which may be used in the information layer alloys comprising at least two of the materials Ge, Sb, Te, In, Se, Bi, Ag, Ga, Sn, Pb, As have been found.

In addition to the dielectric layers and the phase-change layer metal heat sink layers can be provided which are required for quick heat removal (quenching) during writing to enable mark formation. Such metal layers also serve as a reflector to enhance the read-out of data and/or absorption of the incident radiation by the recording layer. The following materials or their alloys can be used in a recording stack for optical recording in the UV wavelength range: Al, Ag, Cu, Ag, Ir, Mo, Rh, Pt, Ni, Os, W.

The invention will now be explained in more detail with reference to the drawings in which

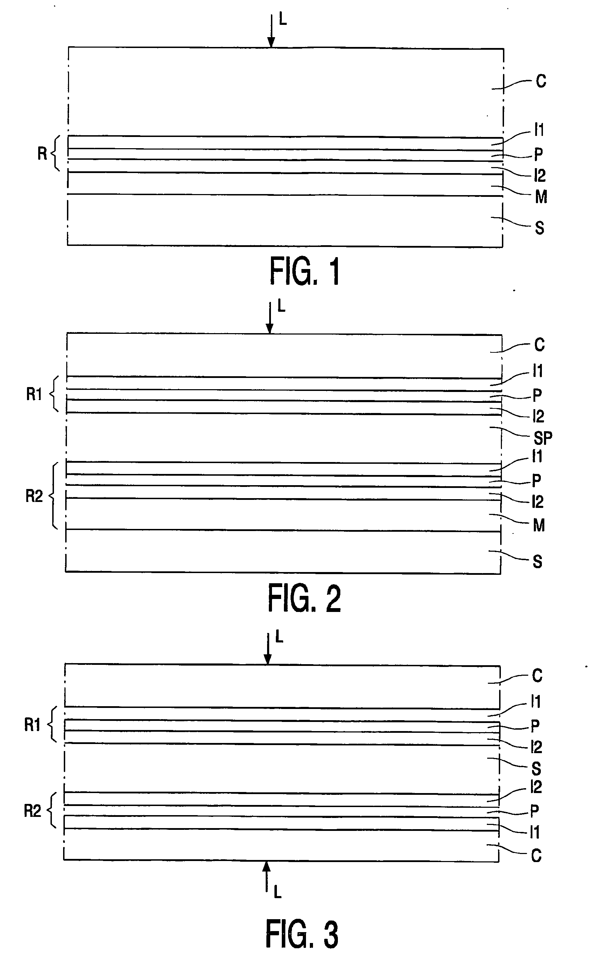

Figs. 1 to 3 schematically show cross-sections of different embodiments of an optical record carrier according to the present invention.

In Fig. 1 an optical record carrier for recording and/or reading information using a radiation beam in the UV wavelength range, in particular having a wavelength in the range from 230 to 270 nm is shown. The optical record carrier comprises a substrate layer (S) and an information stack (R) comprising:
- an information layer (P) comprising a material for forming marks and spaces representing an information by irradiation of a UV radiation beam,
- a transparent cover layer (C) on top of the side of the said record carrier facing the incident UV radiation beam. Said cover layer (C) is made of a curable resin composition being a silicon based reactive material. Described in more detail Fig. 1 shows a first schematic layout of a record carrier comprising an M/I2/P/I1/C information stack R where M is the reflector/ heat sink layer, P is a phase-change information layer and I1 and I2 are protective/interference layers (dielectric layers) or multi-layer structures and C a cover layer for protection of the information stack, which is a so-called MIPI stack. The cover layer C can be provided on top of the I1-layer. A preferred material for said cover layer is Sylgard 184 Silicone Elastomer (product of Dow Chemicals, a mixture of components (1) - (4) mainly comprising polydimethylsiloxane) and has a thickness in a range from 5 to 300 µm. The material can be applied very well by e.g. spin-coating, a technique which is well known in the art. A layer of 100 µm of this material has a transmission at 257 nm of more than 80%. Generally the information stacks can be of either low-to-high signal polarity, where reflection of the recorded state is higher than that of the unrecorded state, or high-to-low signal polarity, where reflection of the unrecorded state is higher than that of the recorded state. Note that the information layer P is not restricted to a rewritable phase change layer. The information layer may also be a read only layer, in which case the read-only layer usually is a reflective layer provided with a relief structure containing the information. In the latter case another M layer is not necessarily required. The information layer may also be a write once layer of a suitable material, e.g. an organic dye layer or an anorganic metallic layer.

Generally the thickness of the metal heat sink /reflective layer M should be larger than 10 nm, in particular larger than 15 nm. The thickness of the phase-change information layer P should be in the range from 3 to 50 nm, in particular from 5 to 25 nm. The thickness of the second dielectric layer I2 should be in the range from 2 to 50 nm, in particular from 3 to 25 nm. The thickness of the first dielectric layer I1 should be larger than 5 nm, in particular larger than 10 nm.

As an example, a recording stack with Si₃N₄ as dielectric layers I1, I2, Al as metal heat sink layer M and In-doped Sb-Te alloy as a phase-change information layer P is preferably proposed. The stack design is S/M/I2/P/I1/C as shown in Fig. 1 where M is the first layer deposited on the disc substrate S and where the UV laser beam L, preferably at a wavelength of 266 nm, enters the stack from the I1-layer side, through the cover layer C.

Additionally on top of the cover layer C at the side facing the UV radiation-beam a transparent or semi-transparent hard-coating layer may be present (not drawn). By the hard-coating layer mechanical resistance of the record carrier can be improved. The hard-coating layer is preferably made of Si-, C-, or S-containing materials and has a thickness in the range from 5 nm to 300 µm. The P, I and M layers may be applied by known sputtering and/or evaporation techniques.

In Fig 2 a multi-layer optical record carrier, further comprising at least one additional information stack and at least one transparent spacer layer for separating the information stacks from each other, said spacer layer (SP) being made of a resin composition containing one or more of the components (1) - (4) is shown. As-depicted, the carrier has two information stacks R1, R2 separated by a spacer layer SP. The spacer layer may be provided by e.g. spin-coating. A preferred material for said spacer layer is Sylgard 184 Silicone Elastomer (product of Dow Chemicals, a mixture of components (1) - (4) mainly comprising polydimethylsiloxane) and has a thickness in a range from 1 µm to 100 µm. Such an optical record carrier has higher (in this case approximately twice) capacity than the optical record carrier comprising only one information stack. All the information stacks in such a record carrier are accessed by the incident UV radiation beam L from the same side of the record carrier.

In Fig. 3 a double-sided optical recording carrier comprising a information stack R1, R2 on each side of the substrate is shown. As depicted, the record carrier has one information stack R1, R2 per side of the substrate S. Such a record carrier has higher (in this case twice) capacity than the record carrier comprising only one information stack. In such a carrier the information stacks R1, R2 situated at the either side of the substrate S are accessed by the incident UV radiation beam L from the side of the substrate S which they are situated at. Double-sided multi-layer media can also be foreseen. Furthermore Small Form Factor Optical (SFFO) recording carriers, e.g. < 30 mm diameter, can be foreseen for use with UV radiation beams. These SFFO carriers would still be able to contain a substantial amount of data, e.g. > 2 GB, due to the high data density achievable with UV-radiation beams.

For recording and/or reading a similar apparatus as used for BD carriers, normal size as well as SFFO, can be used.

In the claims, any reference signs placed between parentheses shall not be construed as limiting the claim. The word "comprising", "comprise" or "comprises" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

According to the present invention an optical record carrier is proposed for use with a UV radiation beam for recording and/or reading, preferably in a wavelength range from 230 to 270 nm. Together with a numerical aperture of NA = 0.85, the effective spot radius (1/*e* of the approximate Gaussian distribution) of a system with λ=266 nm is R0=99 nm. If the effective spot area is considered it can be seen that a data capacity of 60 - 65 Gbyte is achievable for such record carriers. It can be further seen that the gained data capacity is too low for a lower numerical aperture (for instance NA=0.65) and that a numerical aperture of NA = 0.85 is required.

## Claims

1. An optical record carrier for recording and/or reading information using a radiation beam (L) in the UV wavelength range, in particular having a wavelength in the range from 230 to 270 nm, comprising a substrate layer (S) and an information stack (R) comprising:
- an information layer (P) comprising a material for forming marks and spaces representing an information by irradiation of the UV radiation beam,
- a cover layer (C) on top of the side of the said record carrier facing the incident UV radiation beam,
**characterized in that** said cover layer (C) is made of a cured resin composition being a silicon based reactive material.

2. An optical record carrier as claimed in claim 1, wherein the resin composition comprises 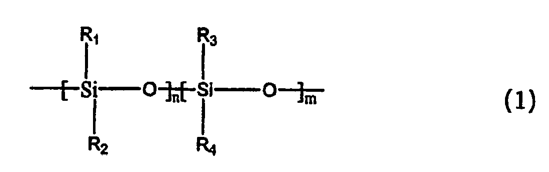 and 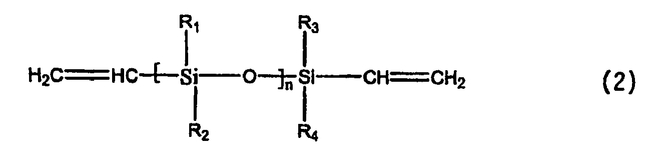 wherein R₁, R₂, R₃, R₄ = hydrogen, C₁-C₁₀-alkyl, vinyl, phenyl, hydroxide, amino, halogen atom, and at least one of R₁, R₂, R₃ and R₄ is hydrogen.

3. An optical record carrier as claimed in claim 2, wherein the resin composition further comprises 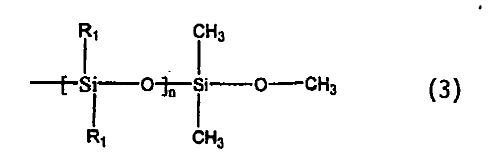 wherein R₁, R₂, R₃ and R₄ have the same meaning as disclosed in claim 2.

4. An optical record carrier as claimed in any one of claims 2-3, wherein the resin composition further comprises 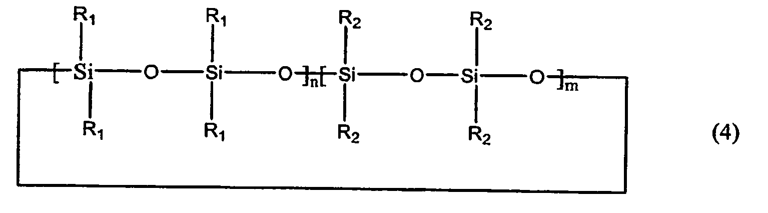 wherein R₁, R₂, R₃ and R₄ have the same meaning as disclosed in claim 2.

5. An optical record carrier as claimed in any one of claims 2-4, wherein component (1) is present in an amount of 40-70 wt.%, based on the total weight of the curable resin composition.

6. An optical record carrier as claimed in any one of claims 2-5, wherein component (2) is present in an amount of 15-40 wt.%, based on the total weight of the curable resin composition.

7. An optical record carrier as claimed in any one of claims 2-6, wherein component (3) is present in an amount of 10-30 wt.%, based on the total weight of the curable resin composition.

8. An optical record carrier as claimed in any one of claims 2-7, wherein component (4) is present in an amount of 1.0-5.0 wt.%, based on the total weight of the curable resin composition.

9. An optical record carrier as claimed in claim 1, further comprising at least one additional recording stack and at least one transparent spacer layer (SP) for separating the recording stacks from each other, said spacer layer being made of a resin composition according to any one of claims 1 - 8.

10. An optical record carrier as claimed in any one of the preceding claims, further comprising at least one auxiliary layer (I, M) comprising a material selected from the group of materials containing Al₂O₃, SiO₂, C, NaCl, ZrO, Si₃N₄, LiF, KCl, Al, Ag, Cu, Ag, Ir, Mo, Rh, Pt, Ni, Os, W.

11. Use of a resin composition as disclosed in any one of claims 1 - 4 for the manufacture of an optical record carrier for recording and/or reading information using a radiation beam (L) in the UV wavelength range.

## Patentansprüche

1. Optischer Aufzeichnungsträger zur Aufzeichnung und/oder zum Lesen von Informationen unter Verwendung eines Strahls (L) in dem UV-Wellenlängenreich, vorzugsweise mit einer Wellenlänge im Bereich von 230 bis 270 nm, welcher eine Substratschicht (S) und einen Informationsstapel (R) aufweist mit:
- einer Informationsschicht (P) mit einem Material zur Ausbildung von, eine Information darstellenden Marken und Leerstellen durch Bestrahlen des UV-Strahls,
- einer Deckschicht (C) auf der Oberseite der Seite des Aufzeichnungsträgers, welche dem auftreffenden UV-Strahl zugewandt ist,
**dadurch gekennzeichnet, dass** die Deckschicht (C) aus einer gehärteten Harzzusammensetzung besteht, bei der es sich um reaktives Material auf Siliciumbasis handelt.

2. Optischer Aufzeichnungsträger nach Anspruch 1, wobei die Harzzusammensetzung enthält 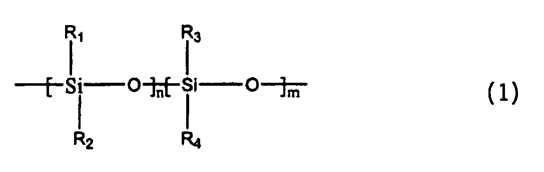 und 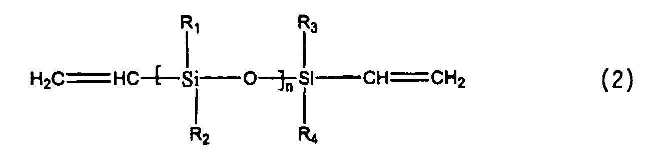 wobei R₁, R₂, R₃, R₄ = Wasserstoff, C₁-C₁₀-Alkyl, Vinyl, Phenyl, Hydroxid, Amino, Halogenatom und von R₁, R₂, R₃ und R₄ mindestens eines Wasserstoff ist.

3. Optischer Aufzeichnungsträger nach Anspruch 2, wobei die Harzzusammensetzung weiterhin enthält 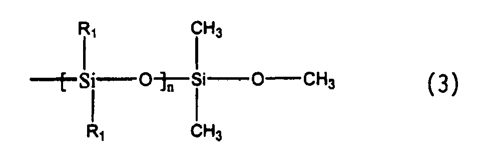 wobei R₁, R₂, R₃ und R₄ die gleiche Bedeutung haben wie in Anspruch 2.

4. Optischer Aufzeichnungsträger nach einem der Ansprüche 2-3, wobei die Harzzusammensetzung weiterhin enthält 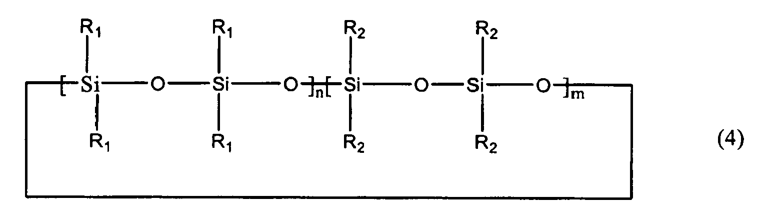 wobei R₁, R₂, R₃ und R₄ die gleiche Bedeutung haben wie in Anspruch 2.

5. Optischer Aufzeichnungsträger nach einem der Ansprüche 2-4, wobei Komponente (1) in einer Menge von 40-70 Gew.%, basierend auf dem Gesamtgewicht der härtbaren Harzzusammensetzung, vorkommt.

6. Optischer Aufzeichnungsträger nach einem der Ansprüche 2-5, wobei Komponente (2) in einer Menge von 15-40 Gew.%, basierend auf dem Gesamtgewicht der härtbaren Harzzusammensetzung, vorkommt.

7. Optischer Aufzeichnungsträger nach einem der Ansprüche 2-6, wobei Komponente (3) in einer Menge von 10-30 Gew.%, basierend auf dem Gesamtgewicht der härtbaren Harzzusammensetzung, vorkommt.

8. Optischer Aufzeichnungsträger nach einem der Ansprüche 2-7, wobei Komponente (4) in einer Menge von 1,0-5,0 Gew.%, basierend auf dem Gesamtgewicht der härtbaren Harzzusammensetzung, vorkommt.

9. Optischer Aufzeichnungsträger nach Anspruch 1, welcher weiterhin mindestens einen zusätzlichen Aufzeichnungsstapel und mindestens eine transparente Abstandsschicht (SP) aufweist, um die Aufzeichnungsstapel voneinander zu trennen, wobei die Abstandsschicht aus einer Harzzusammensetzung gemäß einem der Ansprüche 1 - 8 bestehen.

10. Optischer Aufzeichnungsträger nach einem der vorangegangenen Ansprüche, welcher mindestens eine Zusatzschicht (I, M) mit einem Material aufweist, welches aus der Gruppe von Materialien, der Al₂O₃, SiO₂, C, NaCl, ZrO, Si₃N₄, LiF, KCI, Al, Ag, Cu, Ag, Ir, Mo, Rh, Pt, Ni, Os, W angehören, ausgewählt wird.

11. Verwendung einer Harzzusammensetzung, wie in einem der Ansprüche 1 - 4 zur Herstellung einer optischen Aufzeichnungsschicht zum Aufzeichnen und/oder Lesen von Informationen unter Verwendung eines Strahls (L) in dem UV-Wellenlängenbereich offenbart.

## Revendications

1. Support d'enregistrement optique pour enregistrement et / ou lecture d'informations en utilisant un faisceau de rayonnement (L) dans la gamme des longueurs d'ondes ultraviolettes, ayant en particulier une longueur d'onde dans la plage de 230 à 270 nm, comprenant une couche de substrat (S) et un empilement d'informations (R) comprenant :
- une couche d'informations (P) qui comprend un matériau pour former des marques et des espaces qui représentent des informations, par irradiation par le faisceau de rayonnement ultraviolet,
- une couche de couverture (C) au-dessus de la face dudit support d'enregistrement qui fait face au faisceau incident de rayonnement ultraviolet.
**caractérisé en ce que** ladite couche de couverture (C) est faite d'une composition de résine réticulée qui est un matériau réactif à base de silicone.

2. Support d'enregistrement optique selon la revendication 1, dans lequel la composition de résine comprend 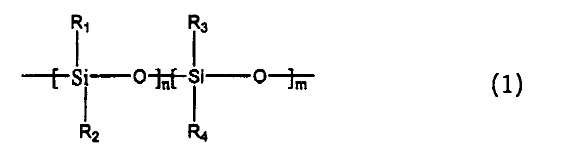 et 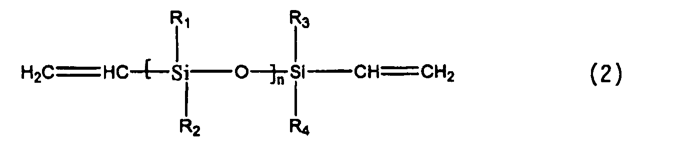 où R₁, R₂, R₃, R₄ = atome d'hydrogène, d'halogène, radical C₁-C₁₀-alkyl, vinyl, phényl, hydroxide, amino, et au moins un des R₁, R₂, R₃ et R₄ est de l'hydrogène.

3. Support d'enregistrement optique selon la revendication 2, dans lequel la composition de résine comprend en outre 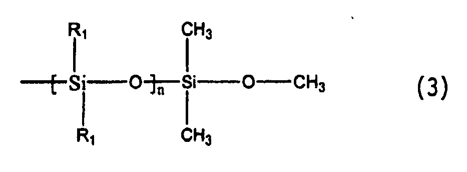 où R₁, R₂, R₃ et R₄ ont la même signification que divulgué dans la revendication 2.

4. Support d'enregistrement optique selon l'une quelconque des revendications 2 et 3, dans lequel la composition de résine comprend en outre 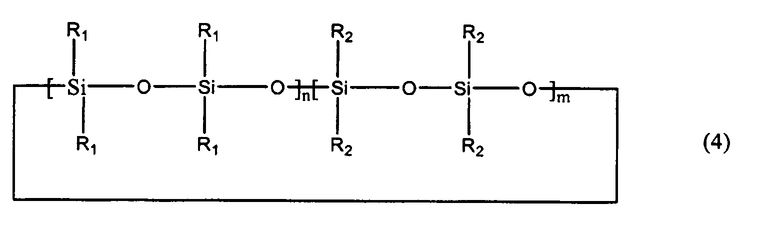 où R₁, R₂, R₃ et R₄ ont la même signification que divulgué dans la revendication 2.

5. Support d'enregistrement optique selon l'une quelconque des revendications 2 à 4, où le composant (1) est présent dans une quantité de 40 à 70% en poids, sur base du poids total de la composition de résine qui peut être réticulée.

6. Support d'enregistrement optique selon l'une quelconque des revendications 2 à 5, où le composant (2) est présent dans une quantité de 15 à 40% en poids, sur base du poids total de la composition de résine qui peut être réticulée.

7. Support d'enregistrement optique selon l'une quelconque des revendications 2 à 6, où le composant (3) est présent dans une quantité de 10 à 30% en poids, sur base du poids total de la composition de résine qui peut être réticulée.

8. Support d'enregistrement optique selon l'une quelconque des revendications 2 à 7, où le composant (4) est présent dans une quantité de 1,0 à 5,0% en poids, sur base du poids total de la composition de résine qui peut être réticulée.

9. Support d'enregistrement optique selon la revendication 1, comprenant en outre au moins un empilement d'enregistrement additionnel et au moins une couche d'espacement transparente (SP) pour séparer les empilements d'enregistrement l'un de l'autre, ladite couche d'espacement étant faite d'une composition de résine selon l'une quelconque des revendications 1 à 8.

10. Support d'enregistrement optique selon l'une quelconque des revendications précédentes, comprenant en outre au moins une couche auxiliaire (I, M) qui comprend un matériau sélectionné parmi le groupe de matériaux qui comprend Al₂O₃, SiO₂, C, NaCl, ZrO, Si₃N₄, LiF, KCl, Al, Ag, Cu, Ag, Ir, Mo, Rh, Pt, Ni, Os, W.

11. Utilisation d'une composition de résine comme divulgué dans l'une quelconque des revendications 1 à 4 pour la fabrication d'un support d'enregistrement optique pour enregistrer et / ou lire des informations en utilisant un faisceau de rayonnement (L) dans la gamme des longueurs d'ondes ultraviolettes.
